# EUROPEAN PATENT APPLICATION

(11) **EP 1 148 288 A1**
(43) Date of publication of application: **24.10.2001**
(21) Application number: 00125922.5
(22) Date of filing: 27.11.2000
(51) Int. Cl.: F16N 7/32

(54) **A numerical control machine and a micro-fog collecting apparatus therefore**

(30) Priority: 07.04.2000 JP 2000105963
(71) Applicant: HEIAN CORPORATION, Hamamatsu-shi, Shizuoka-ken (JP)
(72) Inventor: Shimizu, Takayuki, Hamamatsu-shi, Shizuoka-ken (JP)
(74) Representative: Kirschner, Klaus Dieter, Dipl.-Phys.

(57) **Abstract**

A micro-fog of oil is supplied to an upper bearing and a lower bearing for a rotary shaft of a head through a supply pipe from a micro-fog supply device. The upper bearing is isolated from the atmosphere by a bearing cover and the lower bearing is isolated from the atmosphere by an isolator. The micro-fog supplied the upper bearing and lower bearing is collected by a collecting pipe and a collecting passage of the head.

## Description

The present invention relates to a numerical control machine and a micro-fog collecting apparatus for a numerical control machine.

In a numerical control router in a prior art, a head structure is mounted to move a front side of a cross beam in an upper portion of a base member, and plural heads are mounted to move on the front side of the head structure. A table is provided under the head structure and a process board is positioned on the table. The table is moved back and forth under the cross beam or the table is fixed and the cross beam is moved back and forth. A micro-fog generating device is respectively connected through supply pipes to the heads of the head structure.

The head has a support member to which a stator of a motor is fixed. A router opposite to the stator is fixed to a rotary shaft and the rotary shaft is supported by an upper bearing supported by an upper support member and a lower bearing supported by a lower support member. A tool holder for holding a tool is provided with a lower end of the rotary shaft, the tool is attached to the tool holder. A brush is provided the lower end of the support member and the rotary shaft is rotated when electric power is applied through a wire to the stator.

The pipe connected to the head is connected through a connect portion to the supply passage of the support member of the head. The micro-fog applied to the supply passage is applied to the upper bearing through the upper supply passage of the upper support member and is applied to the lower bearing through lower supply passage of the lower support member.

In such numerical control router, the process board is positioned on the table, the head structure is moved along the cross beam, the table is moved back and forth, the tool is rotated by rotating the rotary shaft of the head and the process board on the table is processed by the tool.

However, in the above numerical control machine, as the upper bearing and lower bearing is open to the atmosphere, the micro-fog of oil supplied through the upper supply passage to the upper bearing and through the lower supply passage to the lower bearing is discharged from the upper bearing and the lower bearing. In the numerical control machine, the air supplied to the upper portion of the head is passed through the upper bearing between the stator and the rotor, through the lower bearing and around the periphery of the lower end of the rotary shaft and is discharged from the inside of the brush to the outside, whereby preventing that wood chips are entered into the lower bearing.

Because the micro-fog of oil is discharged with the air when the air is discharged from the head, the atmosphere in a factory is polluted by the micro-fog of oil. Men are subject of bad influence by breathing the micro-fog of oil. Because the micro-fog of oil is easy to be ignited, men must be careful of fire.

It is, therefore, the object of the present invention to avoid pollution of the atmosphere in a factory by micro-fog of oil being discharged from the numerical control machine.

In order to accomplish the above object, the present invention comprises a numerical control machine comprising a head having a motor driven rotary shaft, an upper bearing and a lower bearing for supporting the rotary shaft and a tool holder for holding a tool, a micro-fog supply apparatus for supplying micro-fog of oil to the upper bearing and the lower bearing, characterized by means for respectively isolating the upper bearing and the lower bearing from the atmosphere, and a collection apparatus for collecting the micro-fog of oil supplied the upper bearing and the lower bearing.

Thus, the numerical control machine of the present invention comprises a micro-fog collecting apparatus by which micro-fog of oil is collected from bearings of a head of a numerical control machine.

According to a preferred embodiment, the numerical control machine having an upper support member, a support member of a stator of a driving motor and a lower support member, is characterized in that the supply and collection of the micro-fog of oil to the upper bearing and the lower bearing is performed by passages to the upper support member, the support member and the lower support member.

According to a preferred embodiment, the numerical control machine of any of the preceding claims having an upper support member, a support member of a stator of a driving motor and a lower support member, characterized in that the supply passage and a collecting passage are connected to the upper support member, the support member and the lower support member, where a supply pipe is connected to the supply passage and attached to the upper support member, a collecting pipe connected to the collecting passage and attached to the upper support member, and wherein a micro-fog supply device supplies micro-fog of oil to the upper bearing and the lower bearing through the supply pipe, and a collecting device collects the micro-fog of oil supplied to the upper bearing and the lower bearing through the collecting pipe.

In order to accomplish the above object, the present invention also comprises a micro-fog collecting device in a numerical control machine having an upper support member, a support member of a stator of a driving motor of a rotary shaft and a lower support member, characterized in that a supply passage and a collecting passage are connected to the upper support member, the support member and the lower support member, that a supply pipe is connected to the supply passage and attached to the upper support member, a collecting pipe is connected to the collecting passage and attached to the upper support member, and that a micro-fog supply device supplies micro-fog of oil to an upper bearing of the rotary shaft and a lower bearing of the rotary shaft through the supply pipe, and a collecting device collects the micro-fog of oil supplied to the upper bearing and the lower bearing through the collecting pipe.

Further preferred embodiments of the invention and the features thereof are given in the appended claims and sub-claims.

Preferred embodiments of the invention will now be described in detail in conjunction with the accompanying drawings in which
Fig. 1 shows a constitution view of a micro-fog supply apparatus in a numerical control machine in the prior art;
Fig. 2 shows a sectional view of a head in the numerical control machine in Fig. 1;
Fig. 3 shows a constitution view of a micro-fog supply apparatus in a numerical control machine in the present invention; and
Fig. 4 shows a sectional view of a head in the numerical control machine in Fig. 2.

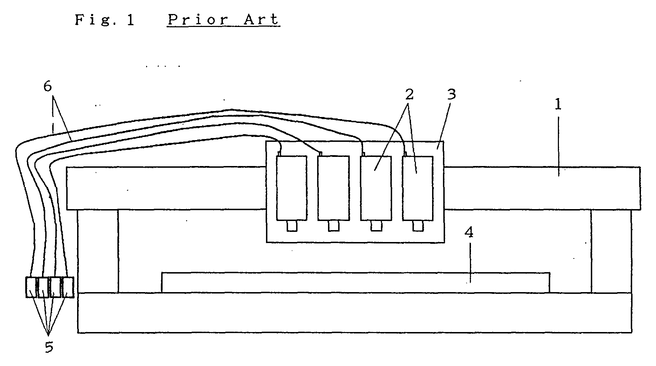

In a numerical control machine in the prior art, a head structure 3 having plural heads 2 is mounted to move along a cross beam as shown in Fig. 1, and a table 4 on which a process board is positioned is provided under the cross beam 1. The table 4 or the cross beam 1 is moved back and forth, and a micro-fog supply device 5 is connected through supply pipes 6 to the heads 2.

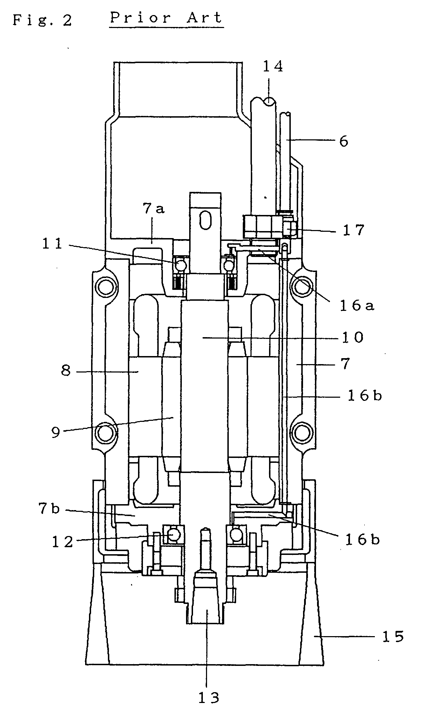

As shown in Fig. 2, a stator 8 of a motor is attached to a support member 7 in the head 2, a rotor 9 is attached to a rotary shaft 10 opposite to the stator 8, and the rotary shaft 10 is supported by an upper bearing 11 attached to an upper support member 7a and the lower bearing 12 attached to a lower support member 7b. A tool holder 13 for holding a tool is attached to the lower end of the rotary shaft 10, a brush 15 is attached to the lower end of the support member 7, and a cable 14 for supplying electric power to the motor is attached to the upper portion of the head 2.

The supply pipe 6 is connected to the support member 7 by a connecting member 17, the micro-fog of oil is supplied to the upper bearing 11 through a supply passage 16a formed at the upper support member 17a and to the lower bearing 12 through a supply passage 16b formed between upper support member 7a and lower support member 7b.

In such numerical control router, the process board is positioned on the table 4, the head structure is moved along the cross beam 1, the table 4 or the cross beam 1 is moved back and forth, the tool is rotated by rotating the rotary shaft 10 of the head 2, and the process board on the table 4 is processed in turn by the tool according to a program.

In this numerical control machine, the micro-fog of oil supplied through supply passages 16a and 16b is discharged from the upper bearing 11 and lower bearing 12 to atmosphere, because the upper bearing 11 and lower bearing 12 are open to the atmosphere. Since the pressurized air is supply the upper end of head 2 and is discharged from the brush of the lower end of the head 2 because wood chips are not to enter the lower bearing 12, the micro-fog of oil supplied the upper bearing 11 and the lower bearing 12 is discharged to the atmosphere with the air supplied to the head 2. The atmosphere in a factory is polluted by the micro-fog of oil. Men are subjected to bad influence by breathing the micro-fog of oil. Because the micro-fog of oil is easily ignited, men must be careful of fire.

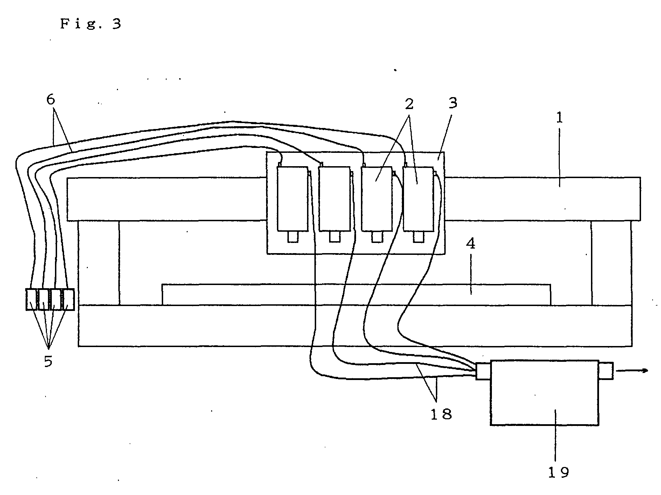

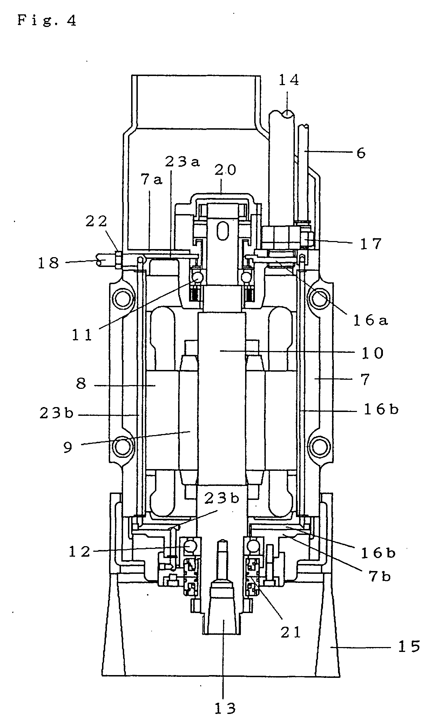

Referring to Figs. 3 and 4, there are shown a cross beam 1, a head 2, a head structure 3, a table 4, a micro-fog supply device 5, pipes 6, a support member 7, a stator 8 of a motor, a rotor of the motor, a rotary shaft 10, an upper bearing 11, a lower bearing 12, a tool holder 13, a cable 14, a brush 15, supply passages 16a, 16b and a connecting member 17. This construction is same as these of the above prior art.

In the embodiment in the present invention, as shown in Fig. 3, one ends of collecting pipes 18 are respectively connected to the heads 2, and the other ends are connected to a collecting device 19. A bearing cover 20 is mounted on the upper end of the rotary shaft 10 above the upper bearing 11, and an isolator 21 is attached to the periphery of the rotary shaft 10 below the lower bearing 12. A connecting member 22 for connecting the collecting pipe 18 is attached to the upper end of the support member 7. A collecting passage 23a for collecting the micro-fog of oil from the upper bearing 11 is formed to the upper support member 7a for connecting to the connecting member 22, and a collecting passage 23b is formed at the support member 7 and lower support member 7b for collecting the micro-fog of oil from the lower bearing 12.

In this apparatus for collecting micro-fog of oil which the rotary shaft 10 of the head 2 is supported by the upper bearing 11, is isolated from the atmosphere by the bearing cover 20. The lower bearing 12 is isolated from the atmosphere by the isolator 21. Therefore, because the micro-fog of oil supplied to the upper bearing 11 and the lower bearing 12 is collected by the collecting devices 19 through the collecting passages 23a and 23b and the collecting pipes 18, the micro-fog is not discharged from the head 2 and the atmosphere in a factory is not polluted by the micro-fog of oil.

Although four heads 2 are mounted on the head structure 3 in the embodiment, there may be one or four or more heads 2 connected to the micro-fog supply device 5 and the collecting device 19 through the pipes.

The apparatus for collecting micro-fog of oil in the numerical control apparatus, the upper bearing is isolated from the atmosphere by the bearing cover, the lower bearing is isolated from the atmosphere by the isolator, the micro-fog of oil supplied to the upper bearing and the lower bearing is collected through the collecting passage and the collecting pipes by the collecting device. Therefore, because the micro-fog of oil is not discharged from the head, the atmosphere in a factory is not polluted by the micro-fog of oil. Men are not subjected to bad influence by breathing the micro-fog of oil, and men must not be careful of fire.

## Claims

1. Numerical control machine comprising a head having a motor driven rotary shaft(10), an upper bearing (11) and a lower bearing (12) for supporting the rotary shaft (10) and a tool holder (13) for holding a tool, a micro-fog supply apparatus for supplying micro-fog of oil to the upper bearing (11) and the lower bearing (12), **characterized by** means for respectively isolating the upper bearing (11) and the lower bearing (12) from the atmosphere, and a collection apparatus for collecting the micro-fog of oil supplied the upper bearing (11) and the lower bearing (12).

2. The numerical control machine of claim 1 wherein means for isolating the upper bearing (11) is a bearing cover (20) attached to an upper portion of the rotary shaft (10).

3. The numerical control machine of claim 1, wherein the means for isolating the lower bearing (12) is an isolator (21) attached to a lower portion of the rotary shaft (10).

4. The numerical control machine of claim 1, 2 or 3 having an upper support member (7a), a support member (7) of a stator of a driving motor and a lower support member (7b), wherein the supply and collection of the micro-fog of oil to the upper bearing (11) and the lower bearing (12) is performed by passages to the upper support member (7a), the support member (7) and the lower support member (7b).

5. The numerical control machine of any of the preceding claims, wherein one or more head(s) (2) is/are mounted on the head structure.

6. The numerical control machine of any of the preceding claims having an upper support member (7a), a support member (7) of a stator of a driving motor and a lower support member (7b), wherein a supply passage and a collecting passage are connected to the upper support member (7a), the support member (7) and the lower support member (7b), where a supply pipe is connected to the supply passage and attached to the upper support member (7a), a collecting pipe connected to the collecting passage and attached to the upper support member (7a), and wherein a micro-fog supply device supplies micro-fog of oil to the upper bearing (11) and the lower bearing (12) through the supply pipe, and a collecting device collects the micro-fog of oil supplied to the upper bearing (11) and the lower bearing (12) through the collecting pipe.

7. A micro-fog collecting device in a numerical control machine having an upper support member (7a), a support member (7) of a stator of a driving motor of a rotary shaft (10) and a lower support member (7b), **characterized in that** a supply passage and a collecting passage are connected to the upper support member (7a), the support member (7) and the lower support member (7b), that a supply pipe is connected to the supply passage and attached to the upper support member (7a), a collecting pipe is connected to the collecting passage and attached to the upper support member (7a), and that a micro-fog supply device supplies micro-fog of oil to an upper bearing (11) of the rotary shaft (10) and a lower bearing (12) of the rotary shaft (10) through the supply pipe, and a collecting device collects the micro-fog of oil supplied to the upper bearing (11) and the lower bearing (12) through the collecting pipe.

8. The device of claim 7, **characterized by** a bearing cover for isolating the upper bearing (11) which cover is attached to an upper portion of the rotary shaft (10).

9. The device of claim 7, **characterized by** an isolator for isolating the lower bearing (12) which isolator is attached to a lower portion of the rotary shaft (10).
